(19) **Europäisches Patentamt**

**European Patent Office**

**Office européen des brevets**

(11) **EP 0 855 289 B1**

(12) **EUROPEAN PATENT SPECIFICATION**

(45) Date of publication and mention
of the grant of the patent:
**04.12.2002  Bulletin 2002/49**

(51) Int Cl.⁷: **B60C 9/22**

(21) Application number: **98300563.8**

(22) Date of filing: **27.01.1998**

(54) **Motorcycle tyre**

Motorradreifen

Bandage pneumatique pour moto

(84) Designated Contracting States:
**DE FR GB**

(30) Priority: **28.01.1997  JP 1409397**

(43) Date of publication of application:
**29.07.1998  Bulletin 1998/31**

(73) Proprietor: **Sumitomo Rubber Industries Ltd.
Kobe-shi, Hyogo-ken (JP)**

(72) Inventor: **Funahara, Kiyoshi
Toyota-shi, Aichi-ken (JP)**

(74) Representative: **Stewart, Charles Geoffrey
Dunlop Tyres Ltd
Fort Dunlop, Erdington,
Birmingham B24 9QT (GB)**

(56) References cited:
**EP-A- 0 540 202          US-A- 5 176 770**

**Description**

The present invention relates to a motorcycle tyre having an improved spiral belt structure.

In general, in cross section the tread surface of a motorcycle tyre has a relatively small radius of curvature, and the radially outer side of the carcass also has a relatively small radius of curvature.

In the laid-open Japanese patent application JP-A-61085203 corresponding with the preamble of claim 1, a motorcycle tyre with a spiral belt is disclosed, wherein the spiral belt is formed by winding a tape which is a plurality of parallel cords embedded in a topping rubber.

Document EP-A-0 540 202 discloses a motorcycle tire with a belt comprising a ply of spirally wound cords, the ply being made by spirally winding simultaneously two or three independent reinforcing members, each composed of a cord and a rubber coating covering the cord. The cords of the two or three simultaneously wound reinforcing members have at least two different elastic moduli and appear alternately in the widthwise direction of the belt.

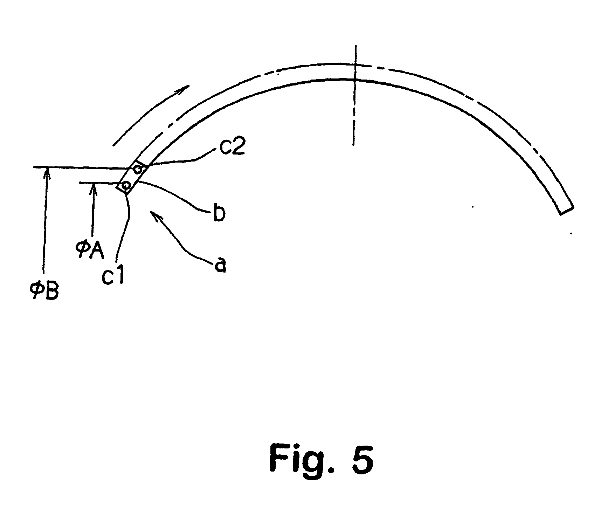

Especially with regard to the Japanese patent application JP-A-61085203, when such a tape is wound on the radially outer surface of a carcass having a small radius of curvature as shown in Fig.5, the difference ($\theta A$-$\theta B$) in winding diameter between the adjacent cords c1 and c2 is larger in the tyre shoulder portion (a). As a result, the belt former is liable to undulate, and accordingly, the tread surface is also liable to be undulated. Further, even if such undulation can be avoided, it is almost impossible to completely eliminate uneven tension distribution from the belt cords. In either case the cornering performance is liable to be deteriorated.

It is therefore, an object of the present invention to provide a motorcycle tyre, in which undulation of the belt and tread surface can be prevented, and deterioration in cornering performance can be avoided.

According to the present invention, a motorcycle tyre comprises a carcass extending between bead portions through a tread portion and sidewall portions, and a belt comprising a ply of spirally wound cords disposed radially outside the carcass, the ply being formed by spirally winding tapes each being made of two or more parallel cords embedded in a topping rubber along the longitudinal direction thereof, the belt cords in each said tape having at least two different tensile elastic moduli and being arranged in order of tensile elastic modulus such that the cord C1 having the maximum modulus E1 is disposed axially outside of the cord Cn having the minimum modulus En.

Preferably, the average modulus difference (E1-En)/n, which is defined as the difference between the maximum modulus E1 and the minimum modulus En divided by the number (n) of the cords in a tape, is in the range of from 0.005 to 0.04 times the maximum modulus E1.

As a result, the tension of the belt cords in the finished tyre can be unified.

Embodiments of the present invention will now be described in detail in conjunction with the accompanying drawings:

Fig.1 is a cross sectional view of an embodiment of the present invention;
Fig.2 is a perspective view of an example of the tape;
Fig.3 is a perspective view of another example of the tape;
Fig.4 is a diagram showing a method of winding tapes; and
Fig.5 is a diagram for explaining a prior art.

In the drawings, a motorcycle tyre 1 comprises a tread portion 2, a pair of axially spaced bead portions 4 each with a bead core therein, a pair of sidewall portions 3 extending between the tread edges E and the bead portions 4, a carcass 6 extending between the bead portions, a belt 7 disposed radially outside the carcass 6 and inside a rubber tread in the tread portion 2.

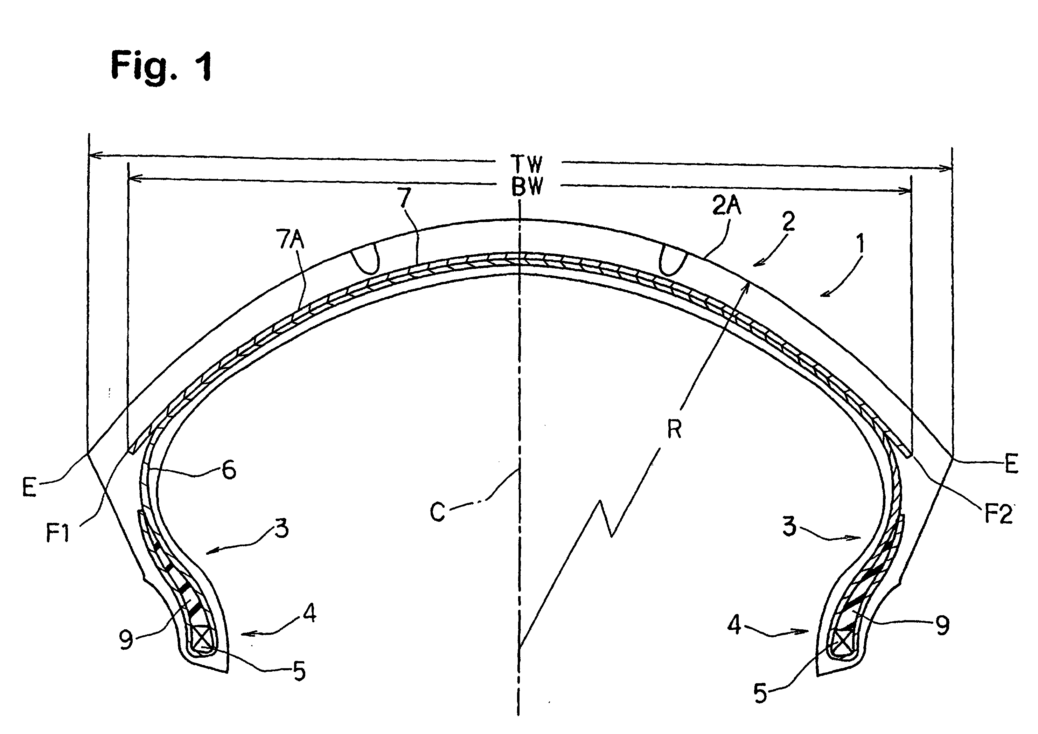

The tread portion 2 is, as shown in Fig.1, curved such that in the tyre meridian section, the tread surface 2A has a radius of curvature R having a centre on the tyre equator C, and the maximum cross sectional width TW of the tyre lies between the axial edges E and E of the tread surface 2A.

Preferably, the radius R is set in the range of from 0.3 to 1.0 times the tread width TW for handling performance. If the radius R is less than 0.3 times, the camber thrust becomes excessively increased, which induces an excessive leaning during cornering and deteriorates the handling performance. If more than 1.0 times, the camber becomes insufficient, which makes it difficult to lean inwards during cornering and thus deteriorates the handling performance.

The carcass 6 comprises at least one ply of cords extending between the bead portions 4 through the tread portion 2 and sidewall portions 3 and turned up around the bead cores 5 from the inside to the outside of the tyre to form a pair of turnup portions and a main portion therebetween. The cords in each ply are arranged at an angle of from 70 to 90 degrees to the tyre equator C to define a radial or semiradial ply construction. In this example, the carcass is composed of a single ply. For the carcass cords, organic fibre cords, e.g. nylon, polyester, rayon, aromatic polyamide and the like can be used. Between the main portion and each turnup portion, a bead apex 9 made of hard rubber tapering radially outwardly from the bead core 5 is disposed.

The belt 7 comprises at least one ply 7A of spirally wound cords. In this example, the belt 7 is composed of only one ply. The angle of the cords is in the range of from 0 to 5 degrees with respect to the tyre equator C.

The belt ply 7A is formed by spirally winding a long narrow-width tape 10 on the radially outer surface of the carcass 6 which as can be seen has a substantially curved outer surface.

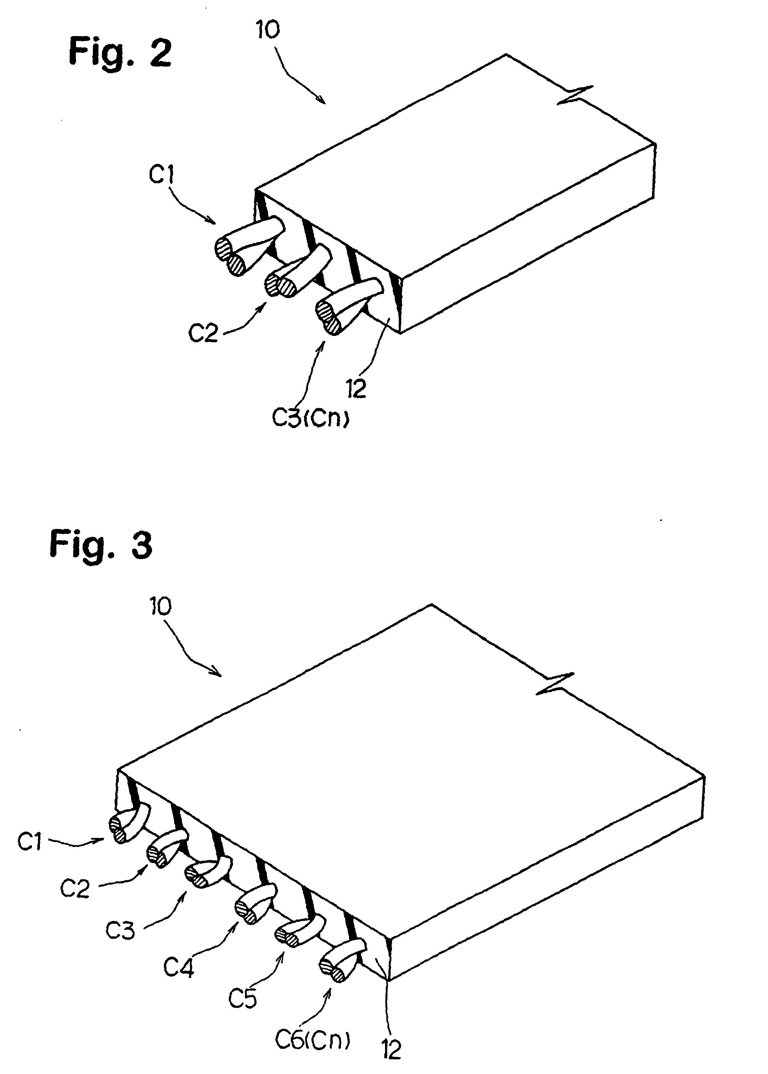

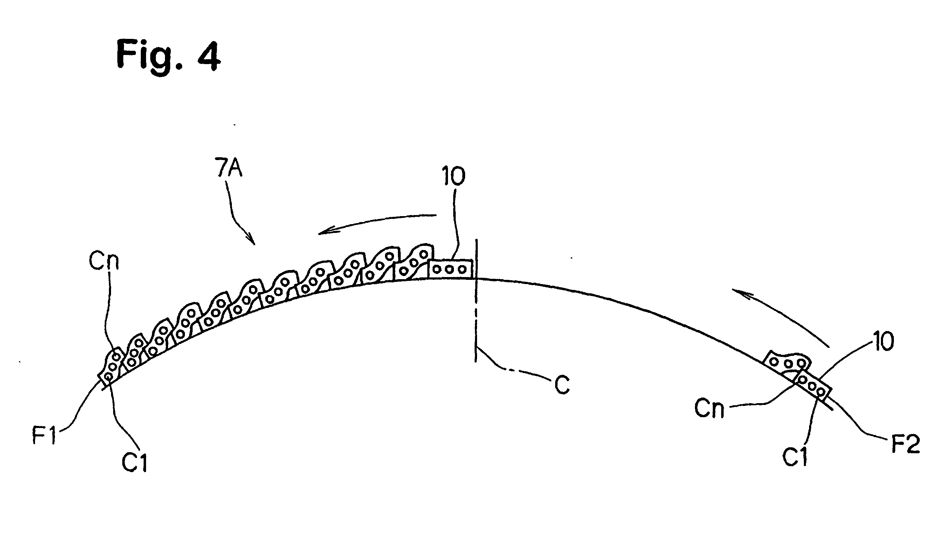

As shown in Figs.2 and 4, the tape 10 comprises a plurality of parallel cords embedded in topping rubber 12 along the longitudinal direction thereof. For the belt cords, organic fibre cords, e.g. aromatic polyamide, aromatic polyester, carbon, nylon, polyester, vinylon and the like, and steel cords can be used.

According to the invention, the cords in the tape 10 have at least two different tensile elastic moduli.

In the tape 10, the cords are disposed in order of modulus from one of the side edges to the other with a definite spacing between the cords. The cords have differing moduli. The cord C1 having the greatest modulus E1 is disposed in one side edge, and a cord Cn having the smaller modulus En is disposed in the other side edge.

The tape 10 is wound in such a way that the highest modulus cord C1 is positioned in the tyre on the axially outer side and accordingly, the lowest modulus cord Cn is positioned on the axially inner side.

When the modulus of a cord Ci is defined as Ei, then

$$E1 > En$$

and

$$Ei \geq Ei+1,$$

wherein
   i is suffix from 1 to n
and
   n is the number of all the cords in a tape.

The number (n) is set in the range of 2 to 10, preferably 3 to 6. If n>10, the tape becomes too wide to spirally wind it without undulation. Thus, running performance is liable to deteriorate.

The number of different kinds of moduli is preferably 3 to 6 if the number (n) is over 4. It is preferable that all the cords in a tape have different moduli. However, it is also possible that the tape includes some cords having the same modulus.

For example, if n=2, then E1>E2.
if n=3 as shown in Fig.2, then E1>E3 and E1≥E2≥E3, preferably E1>E2>E3.

If n=4, then E1>E4 and E1≥E2≥E3≥E4, preferably E1>E2>E3>E4.

If n=6 as shown in Fig.3, then E1>E6 and E1≥E2≥E3≥E4≥E5≥E6, preferably E1>E2>E3>E4>E5>E6. E1=E2>E3=E4>E5=E6 is also preferable for decreasing the number of different cords.

The average modulus difference (E1-En)/(n) in a tape is set in the range of from 0.005 to 0.04 times the maximum modulus E1 to unify the tensions of the cords in the wound tape 10. If (E1-En)/n is less than 0.005 times E1, it is difficult to obtain uniform tension. More preferably, (E1-En)/(n) is not less than 0.01 times E1. If (E1-En)/n is increased to more than 0.04 times E1, the belt cord tension again becomes uneven, and cornering characteristics are liable to deteriorated. More preferably (E1-En)/(n) is not more than 0.03 times E1.

For the same reason, the difference (Ei-Ei+1) in tensile elastic modulus between the adjacent cords in a tape is preferably set in the range of from 0.005 to 0.04 times the higher modulus (Ei). In

this case, therefore, the moduli continuously decrease from the axially outside to the axially inside (Ei>Ei+1).

The above-mentioned different kinds of moduli can be obtained, for example, by changing the twist of the cord elements such as strands, filaments and the like which are twisted together. It is also possible to change cord treating processes such as the process of dipping into a chemical agent, a heat treatment process or the like. Those methods make it possible to use the same cord structure in a tape.

As the above-mentioned tensile elastic modulus, a value

$$(WX10)/S$$

is used, wherein
   S is the cross sectional area of a cord,
   W is a load corresponding to 10% elongation obtained on a straight line drawn from the origin of the load and elongation curve of the cord at the same inclination as the initial inclination of the load and elongation curve.

Fig.4 shows an example of the tape winding, wherein on one side (left side) of the tyre equator C, a tape 10 is wound from the tyre equator C to the belt edge position F1, but on the other side (right side) of the tyre equator C, a tape 10 is wound from the belt edge position F2 to the tyre equator C. However, other winding arrangements are also possible. For example, on each side of the tyre equator C, a tape 10 can be wound from the belt edge position F1, F2 to the tyre equator C. In the example shown in Fig.4, the edges of the wound tape are slightly overlapped in order to prevent the tape from getting loose during winding. It is however not always necessary to overlap.

According to the invention, it is necessary for making a belt ply to wind at least two tapes 10. By winding all the tapes at the same time, the time taken to make the belt can be decreased and the production efficiency can be improved.

In this example, the right half and the left half of the belt ply have the same winding direction. However, it is also possible to change the winding direction so that the ply becomes symmetrical about the tyre equator.

Furthermore, it is also possible to wind a third tape made of the same modulus cords in order to form a central part of the belt, because the central part of the tread surface has a relatively large radius of curvature and does not have the problem.

Comparison Tests

Test tyres having the same structure shown in Fig.1 except for the belt structures were made and tested for high speed cornering stability and transitional cornering characteristic.

Specifications relating to the belts are shown in Table 1 and other common specifications are as follows:

Tyre size : 180/55ZR17 (Rim size : MT5.50X17)
Carcass

    No. of ply : 1
    Cord angle : 90 degrees to the tyre equator
    Cord : nylon 1890d/2

Belt

    No. of ply : 1
    Maximum axial width BW : 160 mm
    Cord angle : almost 0 degree to the tyre equator
    Cord : Aromatic polyamide 1500d/2

Method of changing the moduli : changing twist numbers

(1) High speed cornering stability test

The stability during high speed cornering (the degree of difficulty in occurring vibrations of the vehicle body) was evaluated by the test rider's feeling into five ranks where the larger value is better, and the signs (+) and (-) following the number of rank mean "good" and "poor", respectively.

(2) Transitional cornering test

The change of cornering characteristic when the bank angle was changed was evaluated by the test rider's feeling into five ranks where the larger the value, the smaller the characteristic change. The signs (+) and (-) following the number of rank mean "good" and "poor", respectively.

In the above two tests, the test tyres were mounted on the rear wheel of a 750cc motorcycle. On the front wheel a 120/70ZR17 tyre was mounted. The inner pressure was 2.9 kgf/sq.cm. The evaluations were carried out while running on a dry road surface.

As described above, in the motorcycle tyre according to the present invention, the tension of the belt cords in a tape can be unified, and as a result, the undulation of the belt and tread surface are prevented and deterioration of cornering performance can be avoided.

**TABLE 1**

| Tyre | Ref.1 | Ref.2 | Ex.1 | Ex.2 | Ex.3 | Ex.4 | Ex.5 | Ex.6 | Ex.7 | Ex.8 | Ex.9 | Ex.12 | Ex.11 | Ex.10 |
|---|---|---|---|---|---|---|---|---|---|---|---|---|---|---|
| No. of belt cords n in a tape | 1 | 3 | 3 | 3 | 3 | 3 | 3 | 3 | 3 | 3 | 3 | 6 | 7 | 10 |
| Cord modulus ($\times 10^4$ kg/sq.cm) | | | | | | | | | | | | | | |
| E1 | 4 | 4 | 4 | 4 | 4 | 4 | 4 | 4 | 4 | 4 | 4 | 4 | 4 | 4 |
| E2 | - | 4 | 3.98 | 3.96 | 3.92 | 3.92 | 3.9 | 3.84 | 3.8 | 3.8 | 3.99 | 3.95 | 3.98 | 3.98 |
| E3 | - | 4 | 3.96 | 3.92 | 3.92 | 3.84 | 3.8 | 3.69 | 3.5 | 3.4 | 3.96 | 3.9 | 3.95 | 3.95 |
| E4 | - | - | - | - | - | - | - | - | - | - | - | 3.85 | 3.9 | 3.9 |
| E5 | - | - | - | - | - | - | - | - | - | - | - | 3.8 | 3.85 | 3.85 |
| E6 | - | - | - | - | - | - | - | - | - | - | - | 3.76 | 3.8 | 3.8 |
| E7 | - | - | - | - | - | - | - | - | - | - | - | - | 3.72 | 3.75 |
| E8 | - | - | - | - | - | - | - | - | - | - | - | | - | 3.7 |
| E9 | - | - | - | - | - | - | - | - | - | - | - | | - | 3.65 |
| E10 | - | - | - | - | - | - | - | - | - | - | - | | - | 3.6 |
| Modulus difference | | | | | | | | | | | | | | |
| E1-E2/E1 | - | 0 | 0.01 | 0.01 | 0.02 | 0.02 | 0 | 0.04 | 0 | 0 | 0 | 0.01 | 0.01 | 0.01 |
| E2-E3/E2 | - | 0 | 0.01 | 0.01 | 0 | 0.02 | 0 | 0.04 | 0.1 | 0.1 | 0.01 | 0.01 | 0.01 | 0.01 |
| E3-E4/E3 | - | - | - | - | - | - | - | - | - | - | - | 0.01 | 0.01 | 0.01 |
| E4-E5/E4 | - | - | - | - | - | - | - | - | - | - | - | 0.01 | 0.01 | 0.01 |
| E5-E6/E5 | - | - | - | - | - | - | - | - | - | - | - | 0.01 | 0.01 | 0.01 |
| E6-E7/E6 | - | - | - | - | - | - | - | - | - | - | - | 0.01 | 0.01 | 0.01 |
| E7-E8/E7 | - | - | - | - | - | - | - | - | - | - | - | - | 0.02 | 0.01 |
| E8-E9/E8 | - | - | - | - | - | - | - | - | - | - | - | | - | 0.01 |
| E9-E10/E9 | - | - | - | - | - | - | - | - | - | - | - | | - | 0.01 |
| (E1-En)/(n E1) | - | 0 | 0 | 0.01 | 0.01 | 0.01 | 0 | 0.03 | 0 | 0.1 | 0 | 0.01 | 0.01 | 0.01 |
| **Test Results** | | | | | | | | | | | | | | |
| High speed cornering stability | 5(+) | 3 | 5(-) | 5(+) | 5(-) | 5(+) | 5(+) | 4(+) | (4+) | 4(-) | 4(+) | 5(-) | 4(+) | 4(-) |
| Transitional cornering characteristic | 5(+) | 3 | 4(+) | 5(-) | 5(-) | 5(+) | 5(+) | 4(-) | 4(-) | 3 | 4(+) | 5(-) | 4(+) | 4(-) |

EP 0 855 289 B1

## Claims

1. A motorcycle tyre comprising a carcass (6) extending between bead portions (4) through a tread portion (2) and sidewall portions (3) and a belt (7) comprising a ply (7a) of spirally wound cords disposed radially outside the carcass (6), the ply (7a) being formed by spirally winding tapes (10) each being made of two or more parallel cords (C1-Cn) embedded in a topping rubber (12) along the longitudinal direction thereof, **characterised in that** the belt cords (C1-Cn) in each said tape (10) having at least two different tensile elastic moduli and being arranged in order of tensile elastic modulus such that the cord C1 having the maximum modulus E1 is disposed axially outside of the cord Cn having the minimum modulus En.

2. A motorcycle tyre according to claim 1, **characterised in that** the average modulus difference (E1-En)/n, which is defined as the difference between the maximum modulus E1 and the minimum modulus En divided by the number (n) of the cords in a tape, is in the range of from 0.005 to 0.04 times the maximum modulus E1.

3. A motorcycle tyre according to claim 1 or 2, **characterised in that** adjacent cords in a tape (10) have a difference (Ei-Ei+1) in tensile elastic modulus which is in the range of from 0.005 to 0.04 times the higher modulus (Ei).

4. A motorcycle tyre according to claim 1, 2 or 3, **characterised in that** the tread portion (2) is curved such that the maximum cross sectional width TW of the tyre lies between the axial edges (E) of the tread surface (2A).

5. A motorcycle tyre according to claim 1, 2, 3 or 4, **characterised in that** the belt cords (10) are materially the same organic fibre cords, but the twist numbers are changed to provide said different moduli.

6. A motorcycle tyre according to any of claims 1 to 5, **characterised in that** the belt ply (7a) is composed of two wound parts separated at the tyre equator, and the two parts have the same cord winding direction.

## Patentansprüche

1. Motorradreifen mit einer Karkasse (6), die sich zwischen Wulstabschnitten (4) durch einen Laufstreifenabschnitt (2) und Seitenwandabschnitte (3) erstreckt, und einem Gürtel (7), der eine Lage (7a) aus spiralförmig gewickelten Korden umfasst, die radial außerhalb der Karkasse (6) angeordnet sind, wobei die Lage (7a) gebildet ist, indem Bänder (10) spiralförmig gewickelt sind, die jeweils aus zwei oder mehr parallelen Korden (C 1 - Cn) hergestellt sind, die in einer Gummierung (12) entlang ihrer Längsrichtung eingebettet sind, **dadurch gekennzeichnet, dass** die Gürtelkorde (C1 - Cn) in jedem Band (10) mindestens zwei unterschiedliche Zugelastizitätsmoduln aufweisen und in der Reihenfolge der Zugelastizitätsmoduln derart angeordnet sind, dass der Kord (C1) mit dem maximalen Modul (E1) axial außerhalb des Kordes (Cn) mit dem minimalen Modul (En) angeordnet ist.

2. Motorradreifen nach Anspruch 1, **dadurch gekennzeichnet, dass** die durchschnittliche Moduldifferenz (E1 - En) /n, die als die Differenz zwischen dem maximalen Modul (E1) und dem minimalen Modul (En) dividiert durch die Anzahl (n) der Korde in einem Band definiert ist, im Bereich des 0,005 bis 0,04-fachen des maximalen Moduls (E1) liegt.

3. Motorradreifen nach Anspruch 1 oder 2, **dadurch gekennzeichnet, dass** benachbarte Korde in einem Band (10) eine Differenz (Ei - Ei + 1) im Zugelastizitätsmodul aufweisen, die im Bereich des 0,005 bis 0,04-fachen des höheren Moduls (Ei) liegt.

4. Motorradreifen nach Anspruch 1, 2 oder 3, **dadurch gekennzeichnet, dass** der Laufstreifenabschnitt (2) derart gekrümmt ist, dass die maximale Querschnittsbreite (TW) des Reifens zwischen den axialen Kanten (E) der Laufstreifenoberfläche (2A) liegt.

5. Motorradreifen nach Anspruch 1, 2, 3 oder 4, **dadurch gekennzeichnet, dass** die Gürtelkorde (10) materiell die gleichen organischen Faserkorde sind, aber die Verdrillungszahlen derart verändert sind, dass die unterschiedlichen Moduln geschaffen sind.

6. Motorradreifen nach einem der Ansprüche 1 bis 5, **dadurch gekennzeichnet, dass** die Gürtellage (7a) aus zwei gewickelten Teilen besteht, die am Reifenäquator getrennt sind, und dass die beiden Teile die gleiche Kordwickelrichtung aufweisen.

**Revendications**

1. Pneumatique de motocyclette, comprenant une carcasse (6) qui s'étend entre les parties (4) de talon par l'intermédiaire d'une partie (2) de bande de roulement et de parties (3) de flanc, et une ceinture (7) comprenant une nappe (7a) de câbles enroulés en spirale et disposés radialement à l'extérieur de la carcasse (6), la nappe (7a) étant formée par des rubans (10) d'enroulement en spirale formés chacun d'au moins deux câbles parallèles (C1-Cn) enrobés dans un caoutchouc (12) d'enrobage dans leur direction longitudinale, **caractérisé en ce que** les câbles de ceinture (C1-Cn) de chacun des rubans (10) ont au moins deux modules d'élasticité à la traction qui sont différents et ils sont disposés dans l'ordre des modules d'élasticité à la traction de manière que le câble C1 ayant le module maximal E1 soit disposé axialement à l'extérieur du câble Cn ayant le module minimal En.

2. Pneumatique de motocyclette selon la revendication 1, **caractérisé en ce que** la différence moyenne de module (E1 - En)/n, qui est définie comme étant la différence entre le module maximal E1 et le module minimal En divisée par le nombre (n) de câbles d'un ruban, est comprise entre 0,005 et 0,04 fois le module maximal E1.

3. Pneumatique de motocyclette selon la revendication 1 ou 2, **caractérisé en ce que** des câbles adjacents d'un ruban (10) présentent une différence (Ei - Ei+1) de module d'élasticité à la traction qui est comprise entre 0,005 et 0,04 fois le module supérieur (Ei).

4. Pneumatique de motocyclette selon la revendication 1, 2 ou 3, **caractérisé en ce que** la partie de bande de roulement (2) est courbée afin que la largeur maximale en coupe Tw du pneumatique se trouve entre les bords axiaux (E) de la surface (2A) de bande de roulement.

5. Pneumatique de motocyclette selon la revendication 1, 2, 3 ou 4, **caractérisé en ce que** les câbles (10) de ceinture sont matériellement de mêmes câbles de fibres organiques, mais les nombres de torsions sont changés afin qu'ils donnent les modules différents.

6. Pneumatique de motocyclette selon l'une quelconque des revendications 1 à 5, **caractérisé en ce que** la nappe de ceinture (7a) est composée de deux parties enroulées séparées à l'équateur du pneumatique, et les deux parties ont la même direction d'enroulement de câbles.

Fig. 1

8

EP 0 855 289 B1

**Fig. 2**

10

C1

C2

C3(Cn)

12

**Fig. 3**

10

C1

C2

C3

C4

C5

C6(Cn)

12

# Fig. 4

EP 0 855 289 B1

# Fig. 5